# EUROPÄISCHE PATENTSCHRIFT

(11) **EP 1 527 143 B1**
(45) Veröffentlichungstag und Bekanntmachung des Hinweises auf die Patenterteilung: **23.08.2006**
(21) Anmeldenummer: 03792220.0
(22) Anmeldetag: 11.07.2003
(51) Int. Cl.: C09D 167/00

(54) **BESCHICHTUNGSSTOFFE UND IHRE VERWENDUNG ZUR HERSTELLUNG SCHWEISSBARER BESCHICHTUNGEN**
COATING MATERIALS AND THE USE THEREOF FOR THE PRODUCTION OF WELDABLE COATINGS
MATIERES D'ENDUCTION ET LEUR UTILISATION POUR REALISER DES ENDUCTIONS SOUDABLES

(30) Priorität: 08.08.2002 DE 10236349
(43) Veröffentlichungstag der Anmeldung: 04.05.2005
(73) Patentinhaber: BASF Coatings AG, 48165 Münster (DE)
(72) Erfinder: BÄUMER, Marc, 48165 Münster (DE); RUCKPAUL, Markus, 69469 Weinheim (DE); TOBOLL, Petra, 48329 Havixbeck (DE); LENTER, Silvia, 48165 Münster (DE)
(86) Internationale Anmeldenummer: PCT/EP2003/007952
(87) Internationale Veröffentlichungsnummer: WO 2004/018576

(56) Entgegenhaltungen:
- EP-A- 0 008 344
- EP-A- 0 257 144
- EP-A- 0 732 383

## Beschreibung

Die vorliegende Erfindung betrifft neue Beschichtungsstoffe, insbesondere Coil-Coating-Lacke. Außerdem betrifft die vorliegende Erfindung die Verwendung der neuen Beschichtungsstoffe für die Herstellung schweißbarer Beschichtungen, insbesondere auf Coils.

Coil-Coating-Lacke, die überwiegend im Walzenauftrag mit gegenläufigen Walzen auf Stahlbänder, insbesondere verzinkte Stahlbänder, oder Aluminiumbänder aufgetragen werden, sind bekannt. Da die Metallverarbeitung erst nach dem Lackieren erfolgt, müssen die Beschichtungen extrem hohe mechanische Beständigkeit aufweisen. Typische Trocknungszeiten sind 20 bis 40 Sekunden bei einer Objekt-oder Metalltemperatur oder PMT (Peak Metal Temperature) von 200 bis 260 °C. Üblicherweise werden die beschichteten Coils im Baubereich für die Herstellung von Decken- und Wandelementen, Türen, Rohrisolierungen, Rolläden oder Fensterprofilen, im Fahrzeugbereich für die Herstellung von Verkleidungen von Caravans oder Nutzfahrzeugaufbauten und im Haushaltsbereich für die Herstellung von Profilelementen für Wasch- und Geschirrspülmaschinen, Gefrierschränke, Kühlschränke oder Herde verwendet (vgl. Römpp Lexikon Lacke und Druckfarben, Georg Thieme Verlag, Stuttgart, New York, 1998, »Bandbeschichtung«, Seite 55, und »Coil-Coating-Lacke«, Seite 116).

Um die Herstellung von Kraftfahrzeugen weiter technisch zu vereinfachen und wirtschaftlicher zu gestalten, ist man bestrebt, vorgeformte, beschichtete Profilelemente und Formteile für die Herstellung von Karosserien einzusetzen. Dazu ist es aber erforderlich, daß die beschichteten Coils und die hieraus hergestellten Profilelemente und Formteile punktschweißbar sind.

Außerdem soll mit den vorgeformten, beschichteten Profilelementen und Formteilen der Korrosionsschutz für die Karosserien weiter verbessert werden, so daß Korrosionsschutzmaßnahmen, wie das Hohlraumfluten mit Wachs, überflüssig werden. Außerdem wird gefordert, daß die Korrosionsschutzwirkung von kathodisch abgeschiedenen und thermisch gehärteten Elektrotauchlackierungen auf Coils weiter verbessert wird oder daß ganz auf die Elektrotauchlackierungen verzichtet werden kann.

Eine wesentliche Erniedrigung der PMT würde das Coil-Coating-Verfahren außerdem noch wirtschaftlicher und umweltfreundlicher machen, da der Energieaufwand und die Energiekosten signifikant gesenkt werden könnten. Dies würde die beschichteten Coils als Alternative zu herkömmlichen Lackierverfahren noch attraktiver machen Außerdem würden die Beschichtungen und die Bleche thermisch geringer belastet werden, was grundsätzlich von Vorteil wäre.

In der nicht vorveröffentlichten deutschen Patentanmeldung DE 10202543.6 werden Beschichtungsstoffe beschrieben, die als Coil-Coating-Lacke verwendet werden können. Sie können als Bindemittel auch einen Polyester enthalten, der indes hinsichtlich der Hydroxylzahl und Säurezahl nicht näher spezifiziert wird. Die Beschichtungsstoffe können des weiteren Aminoplastharze als Vernetzungsmittel enthalten. Gemische aus Benzoguanamin-Formaldehyd- und Melamin-FormaldehydHarze werden jedoch nicht beschrieben. Vorzugsweise werden ohnedies blockierte Polyisocyanate verwendet. Die Beschichtungsstoffe enthalten ferner korrosionshemmende und elektrisch leitfähige Pigmente und modifiziertes amorphes Siliziumdioxid. Sie können auch Katalysatoren der thermischen Vernetzung enthalten. Allerdings wird nicht gelehrt, daß mindestens zwei Katalysatoren für die thermische Vernetzung von N-Methylol- und N-Methoxymethylgruppen und Hydroxylgruppen verwendet werden sollen; entsprechend der bevorzugten Verwendung von Polyisocyanaten als Vernetzungsmittel wird nur Dibutylzinndilaurat als Katalysator expressis verbis erwähnt.

Auch die EP 0 732 383 beschreibt eine ähnliche Zusammensetzung. Ein elektrisch leitfähiges Pigment wird nicht erwähnt.

### Aufgabe der Erfindung

Aufgabe der vorliegenden Erfindung ist es, daß die Beschichtungsstoffe, insbesondere Coil-Coating-Lacke, als Ersatz für kathodisch auftragbare Grundierungen und/oder Füllerbeschichtungen bei der OEM-Herstellung (= Hersteller Lackierung) geeignet sein sollen.
Ebenfalls war es Teil der Aufgabenstellung, daß die Beschichtungsstoffe, insbesondere Coil-Coating-Lacke, niedrigere Einbrenntemperaturen, insbesondere für Bake-hardening-Stähle ermöglichen sollen.
Aufgabe der vorliegenden Erfindung war es außerdem, neue Beschichtungsstoffe, insbesondere Coil-Coating-Lacke, bereitzustellen, die neue Beschichtungen liefern, die eine extrem hohe mechanische Beständigkeit und eine besonders gute Schweißbarkeit, insbesondere Punktschweißbarkeit, aufweisen. Außerdem sollen sich die neuen Beschichtungsstoffe, insbesondere die Coil-Coating-Lacke, im Bedarfsfall mit Korrosionsschutzpigmenten ausrüsten lassen, so daß die hieraus hergestellten neuen Beschichtungen auch noch eine besonders hohe Korrosionsschutzwirkung entfalten, ohne daß die Schweißbarkeit hierdurch beeinträchtigt wird. Dabei sollen die neuen Beschichtungsstoffe, insbesondere die Coil-Coating-Lacke, neue Beschichtungen liefern, die bessere Schweißpunkte mit einem glatten, ästhetisch noch immer ansprechenden Umkreis bewirken. Außerdem sollen die Schweißverbindungen besonders fest sein. Die neuen Beschichtungen sollen außerdem einen vergleichsweise breiten Schweißbereich und einen vergleichsweise niedrigen Durchgangswiderstand haben und, was die Schweißelektroden betrifft, eine besonders hohe Standmenge bewirken. Nicht zuletzt sollen es die neuen Beschichtungsstoffe gestatten, die neuen beschichteten Coils bei niedrigeren PMT einzubrennen, so daß das neue Coil-Coating-Verfahren mit einem geringeren Energieaufwand besonders wirtschaftlich, umweltfreundlich und mit geringerer thermischer Belastung der Coils durchgeführt werden kann.

Demgemäß wurden die neuen Beschichtungsstoffe gefunden, enthaltend

Beschichtungsstoffe für Coil-Coating-Verfahren, enthaltend
(A) als Bindemittel mindestens einen aliphatischen, araliphatischen und/oder aromatischen Polyester mit einer Säurezahl von < 10 mg KOH/g, einer Hydroxylzahl von 30 bis 200 mg KOH/g, sowie einem zahlenmittleren Molekulargewicht Mn zwischen 1000 und 5000, bevorzugt 1500 bis 4000 und besonders bevorzugt 2000 bis 3500, Dalton,
(B) als Vernetzungsmittel mindestens zwei aminogruppenhaltige Harze mit unterschiedlicher Reaktivität.

Das Vernetzungsmittel (B) enthält dabei bevorzugt
(B1) mindestens ein Benzoguanamin-Formaldehyd-Harz, welches gegebenenfalls mit Methanol teil- und/oder vollverethert ist und/oder
(B2) mindestens Melamin-Formaldehyd-Harz, welches gegebenenfalls mit Methanol verethert ist
oder besteht hieraus.

Weiterhin enthalten die erfindungsgemäßen Beschichtungsstoffe
(C) mindestens ein elektrisch leitfähiges Pigment, und vorzugsweise
(D) mindestens ein korrosionshemmendes Pigment,
(E) mindestens ein amorphes Siliziumdioxid, das mit Metallionen modifiziert ist,
(F) mindestens zwei Katalysatoren der thermischen Vernetzung von N-Methylolgruppen und/oder N-Methoxymethylgruppen mit den komplementären Hydroxylgruppen.

Im Folgenden werden die neuen Beschichtungsstoffe als »erfindungsgemäße Beschichtungsstoffe« bezeichnet.

Weitere Erfindungsgegenstände gehen aus der Beschreibung hervor.

Im Hinblick auf den Stand der Technik war es überraschend und für den Fachmann nicht vorhersehbar, daß die Aufgabe, die der vorliegenden Erfindung zugrundelag, mit Hilfe des erfindungsgemäßen Beschichtungsstoffs gelöst werden konnte.

Insbesondere war es überraschend, daß die erfindungsgemäßen Beschichtungsstoffe, insbesondere die erfindungsgemäßen Coil-Coating-Lacke, erfindungsgemäße Beschichtungen lieferten, die eine extrem hohe mechanische Beständigkeit und eine besonders gute Schweißbarkeit, insbesondere Punktschweißbarkeit, aufwiesen. Außerdem entfalteten die erfindungsgemäßen Beschichtungen einen hervorragenden Korrosionsschutz, ohne daß die Schweißbarkeit hierdurch beeinträchtigt wurde. Dabei lieferten die erfindungsgemäßen Beschichtungsstoffe, insbesondere die erfindungsgemäßen Coil-Coating-Lacke, erfindungsgemäße Beschichtungen, die bessere Schweißpunkte mit einem glatten, ästhetisch noch immer ansprechenden Umkreis bewirkten. Außerdem waren die Schweißverbindungen besonders fest. Die erfindungsgemäßen Beschichtungen wiesen außerdem einen vergleichsweise breiten Schweißbereich und einen vergleichsweise niedrigen Durchgangswiderstand auf und bewirkten, was die Schweißelektroden betraf, eine besonders hohe Standmenge, d. h., die Anzahl der Schweißpunkte, die mit einer Elektrode gesetzt werden konnten, war sehr hoch. Des weiteren wiesen die erfindungsgemäßen Beschichtungen hervorragende mechanische Eigenschaften auf, so daß sie betreffenden beschichteten Coils problemlos deformiert werden konnten.

Dieses besonders vorteilhafte anwendungstechnische Eigenschaftsprofil wurde bei signifikant niedrigeren PMT bei der Härtung erhalten, so daß das Beschichtungsverfahren besonders energiesparend, wirtschaftlich und umweltfreundlich war.

### Ausführliche Beschreibung der Erfindung

Der erste wesentliche Bestandteil der erfindungsgemäßen Beschichtungsstoffe ist mindestens ein, insbesondere ein, gesättigter, aliphatischer und/oder cycloaliphatischer, insbesondere aliphatischer, Polyester (A), der als Bindemittel fungiert. Der Polyester (A) hat eine Säurezahl von < 10, vorzugsweise < 6 und insbesondere < 4 mg KOH/g und eine Hydroxylzahl von 30 bis 200, vorzugsweise 40 bis 150, bevorzugt 50 bis 120 und insbesondere 60 bis 100 mg KOH/g.

Die Polyester (A) können eine zahlenmittlere Molmasse Mn von vorzugsweise 500 bis 10.000, bevorzugt 750 bis 7.500, besonders bevorzugt 1.000 bis 5.000 und insbesondere 1.500 bis 4.000 Dalton aufweisen. Vorzugsweise haben die Polyester (A) eine enge Molekulargewichtsverteilung. Bevorzugt weisen sie eine Uneinheitlichkeit des Molekulargewichts U=Mw/Mn-1 von <10, besonders bevorzugt <8 und insbesondere <6 auf. Vorzugsweise haben sie eine Glasübergangstemperatur von -20 bis +50, bevorzugt -10 bis +40, besonders bevorzugt -10 bis +30 und insbesondere -10 bis +25°C.

Die Polyester (A) können in untergeordneten Mengen, d.h. in Mengen < 50 Equ.-%, bezogen auf die Gesamtmenge der in (A) vorhandenen thermisch vernetzbaren reaktiven funktionellen Gruppen, andere übliche und bekannte reaktive funktionelle Gruppen als die Hydroxylgruppen enthalten, die mit den entsprechenden üblichen und bekannten komplementären reaktiven funktionellen Gruppen thermische Vernetzungsreaktionen eingehen können.

Die Polyester (A) sind an sich bekannte Verbindungen. Ihre Herstellung wird beispielsweise in dem Standardwerk Ullmanns Enzyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben. Am Markt sind sie beispielsweise unter der Marke Uralac ® von der Firma DSM Kunstharze erhältlich.

Der Gehalt der erfindungsgemäßen Beschichtungsstoffe an den Polyestern (A) kann breit variieren und richtet sich in erster Linie nach dem Verwendungszweck der Beschichtungsstoffe sowie der Funktionalität der Polyester (A) und der Vernetzungsmittel (B) hinsichtlich der Vernetzungsreaktion. Vorzugsweise sind sie in den erfindungsgemäßen Beschichtungsstoffen in einer Menge von 5 bis 40, bevorzugt 7,5 bis 35, besonders bevorzugt 10 bis 30 und insbesondere 15 bis 25 Gew.-%, jeweils bezogen auf den Festkörper eines Beschichtungsstoffs, enthalten.

Der zweite wesentliche Bestandteil der erfindungsgemäßen Beschichtungsstoffe sind mindestens zwei, insbesondere zwei Vernetzungsmittel (B).

Hiervon ist mindestens ein, insbesondere ein, Vernetzungsmittel (B) mindestens ein, insbesondere ein, mit Methanol teil- und/oder vollverethertes, insbesondere teilverethertes, Benzoguanamin-Formaldehyd-Harz (B1) und mindestens ein anderes, insbesondere ein anderes, Vernetzungsmittel (B) mindestens ein, insbesondere ein, mit Methanol verethertes, vorzugsweise ein vollverethertes, Melamin-Formaldehyd-Harz (B2).

Die Vernetzungsmittel (B) sind an sich bekannte Verbindungen und werden beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., beschrieben. Sie werden beispielsweise von der Firma BASF AG unter der Marke Luwipal ® vertrieben.

Vorzugsweise werden die Vernetzungsmittel in einem Gewichtsverhältnis von (B1) : (B2) = 1 : 10 bis 10 : 1, bevorzugt 1: 7 bis 7 : 1, besonders bevorzugt 1 : 5 bis 5 : 1 und insbesondere 1 : 3 bis 3 :1 eingesetzt.

Der Gehalt der erfindungsgemäßen Beschichtungsstoffe an den Vernetzungsmitteln (B) kann breit variieren und richtet sich in erster Linie nach ihrer Funktionalität und Reaktivität sowie der Funktionalität der Polyester (A) bezüglich der thermischen Vernetzung. Vorzugsweise sind sie in den erfindungsgemäßen Beschichtungsstoffen in einer Menge von 1 bis 10, bevorzugt 1,5 bis 9, besonders bevorzugt 2 bis 8, besonders bevorzugt 2,5 bis 7 und insbesondere 3 bis 8 Gew.-%, jeweils bezogen auf den Festkörper eines erfindungsgemäßen Beschichtungsstoffs, enthalten.

Der dritte Bestandteil der erfindungsgemäßen Beschichtungsstoffe ist mindestens ein, insbesondere ein, elektrisch leitfähiges Pigment (C). Als elektrisch leitfähige Pigmente (C) kommen die unterschiedlichsten üblichen und bekannten, organischen und anorganischen elektrisch leitfähigen Pigmente in Betracht. Ihre mittlere Teilchengrößen können breit variieren. Vorzugsweise liegen sie zwischen 0,5 und 50, insbesondere 1 bis 30 µm. Vorzugsweise werden sie aus der Gruppe, bestehend aus elementarem Silizium und metallischen, wasserunlöslichen Phosphiden, bevorzugt aus der Gruppe, bestehend aus CrP, MnP, Fe₃P, Fe₂P, Ni₂P, NiP₂ und NiP₃, ausgewählt. Insbesondere werden Eisenphosphide eingesetzt.

Die Eisenphosphide sind handelsübliche Produkte und werden beispielsweise unter der Marke Ferrophos ® vertrieben.

Der Gehalt der erfindungsgemäßen Beschichtungsstoffe an den elektrisch leitfähigen Pigmenten (C) kann breit variieren und richtet sich nach den Erfordernissen des Einzelfalls, insbesondere nach der für eine sehr gute Schweißbarkeit notwendigen elektrischen Leitfähigkeit der erfindungsgemäßen Beschichtungen. Vorzugsweise sind die elektrisch leitfähigen Pigmente (C) in den erfindungsgemäßen Beschichtungsstoffe in einer Menge von 10 bis 80, bevorzugt 15 bis 75, besonders bevorzugt 20 bis 75 und insbesondere 30 bis 75 Gew.-%, jeweils bezogen auf den Festkörper eines erfindungsgemäßen Beschichtungsstoffs, enthalten.

Der vierte optionale Bestandteil der erfindungsgemäßen Beschichtungsstoffe ist mindestens ein, insbesondere ein, korrosionshemmendes Pigment (D). Es können die üblichen und bekannten, organischen und anorganischen, insbesondere anorganischen, korrosionshemmenden Pigmente (D) verwendet werden. Vorzugsweise werden sie aus der Gruppe, bestehend aus Zinkphosphat, insbesondere Zinkorthophosphat, Zinkmetaborat und Bariummetaborat-Monohydrat, insbesondere Zinkorthophosphat und Bariummetaborat-Monohydrat, ausgewählt.

Zinkphosphat und Zinkorthophosphat sind handelsübliche Verbindungen und werden beispielsweise unter der Marke Sicor ® ZNP/S oder dem Handelsnamen Zinkorthophosphat ZP-BS-M vertrieben. Dgl. ist Bariummetaborat-Monohydrat eine handelsübliche Verbindung und wird beispielsweise unter der Marke Butrol ® 11M2 vertrieben.

Der Gehalt der erfindungsgemäßen Beschichtungsstoffe an den korrosionshemmenden Pigmenten (D) kann breit variieren und richtet sich in erster Linie nach den korrosionsfördernden Eigenschaften der Umgebung, der die erfindungsgemäßen Beschichtungen ausgesetzt werden. Vorzugsweise sind sie in den erfindungsgemäßen Beschichtungsstoffen in einer Menge von 1 bis 10, bevorzugt 1 bis 9, besonders bevorzugt 1,5 bis 8, besonders bevorzugt 1,5 bis 7 und insbesondere 1,5 bis 8 Gew.-%, jeweils bezogen auf den Festkörper eines erfindungsgemäßen Beschichtungsstoffs, enthalten.

Der fünfte optionale Bestandteil der erfindungsgemäßen Beschichtungsstoffe ist mindestens ein, insbesondere ein, mit Metallionen modifiziertes amorphes Siliziumdioxid (E). Vorzugsweise werden die Metallionen aus der Gruppe, bestehend aus Erdalkalimetallionen, insbesondere Calciumionen, Scandium-, Yttrium- und Lanthanionen, Lanthanidionen sowie Zink- und Aluminiumionen, ausgewählt. Bevorzugt werden Calciumionen angewandt.

Mit Calciumionen modifiziertes amorphes Siliziumdioxid (E) ist auch ein handelsübliches Produkt und wird beispielsweise unter der Marke Shieldex ® von der Firma Grace Division vertrieben.

Vorzugsweise wird das modifizierte Siliziumdioxid (E) in einer Menge von 1 bis 10, bevorzugt 1 bis 9, besonders bevorzugt 1,5 bis 8, besonders bevorzugt 1,5 bis 7 und insbesondere 1,5 bis 8 Gew.-%, jeweils bezogen auf den Festkörper eines erfindungsgemäßen Beschichtungsstoffs, eingesetzt.

Der sechste optionale Bestandteil der erfindungsgemäßen Beschichtungsstoffe sind mindestens zwei, insbesondere zwei, Katalysatoren (F) der thermischen Vernetzung von N-Methylolgruppen und/oder N-Methoxymethylgruppen mit den komplementären Hydroxylgruppen.

Von den Katalysatoren (F) ist mindestens ein, insbesondere ein, Katalysator (F) ein saures Epoxidharz-Phoshorsäure-Addukt (F1) und mindestens ein anderer, insbesondere ein anderer, Katalysator (F) eine blockierte Sulfonsäure (F2).

Vorzugsweise werden die Phosphorsäure-Addukte von niedermolekularen Epoxidharzen als Katalysatoren (F1) eingesetzt. Sie sind handelsübliche Produkte und werden beispielsweise von der Firma Shell Resins unter der Marke Epikote ® vertrieben.

Vorzugsweise werden mit organischen Aminen blockierte Sulfonsäuren, insbesondere organische Sulfonsäuren, als Katalysatoren (F2) eingesetzt. Sie sind handelsübliche Produkte und werden beispielsweise von der Firma King Industries unter der Marke Nacure ® vertrieben.

Das Gewichtsverhältnis der Katalysatoren (F1) zu (F2) kann breit variieren; vorzugsweise liegt es bei (F1) : (F2) = 20 : 1 bis 1 : 3, bevorzugt 15 : 1 bis 1 : 1, besonders bevorzugt 12 : 1 bis 1,5 : 1 und insbesondere 10 : 1 bis 2 : 1.

Der Gehalt der erfindungsgemäßen Beschichtungsstoffe an den Katalysatoren (F) liegt vorzugsweise bei 0,5 bis 10, bevorzugt 0,5 bis 8, besonders bevorzugt 1 bis 7 und insbesondere 1,5 bis 6 Gew.-%, jeweils bezogen auf den Festkörper eines erfindungsgemäßen Beschichtungsstoffs.

Die erfindungsgemäßen Beschichtungsstoffe können mindestens ein organisches Lösemittel (G) enthalten. Beispiele üblicher und bekannter Lösemittel werden in D. Stoye und W. Freitag, (Hrsg.), »Paints, Coatings and Solvents, 2nd Completely Revised Edition, Wiley-VCH, Weinheim New York, 1998, »14.9. Solvent Groups«, Seiten 327 bis 373 beschrieben. Die Menge des oder der organischen Lösemittel (G) kann sehr breit variieren und richtet sich in erster Linie nach der Löslichkeit und/oder Dispergierbarkeit der löslichen oder dispergierbaren Bestandteile der Beschichtungsstoffe und nach der Viskosität, die für die Applikation der Beschichtungsstoffe eingestellt werden muß. Vorzugsweise sind sie in den erfindungsgemäßen Beschichtungsstoffen in einer Menge von 2 bis 50, insbesondere 5 bis 40 Gew.-%, jeweils bezogen auf die Gesamtmenge eines erfindungsgemäßen Beschichtungsstoffs, enthalten.

Die erfindungsgemäßen Beschichtungsstoff können außerdem mindestens ein, insbesondere ein, oberflächenmodifiziertes pyrogenes Siliziumdioxid (I) enthalten. Vorzugsweise ist das pyrogene Siliziumdioxid mit einem Silylamin, insbesondere Bis(trimethylsilyl)amin, modifiziert. Oberflächenmodifizierte pyrogene Siliziumdioxide sind handelsübliche Produkte und werden beispielsweise unter der Marke Aerosil ® von der Firma Degussa vertrieben. Vorzugsweise sind sie in den erfindungsgemäßen Beschichtungsstoffen in einer Menge von 0,01 bis 3 und insbesondere 0,1 bis 2 Gew.-%, jeweils bezogen auf den Festkörper eines erfindungsgemäßen Beschichtungsstoffs, enthalten.

Die erfindungsgemäßen Beschichtungsstoffe können des weiteren mindestens eine, insbesondere eine, Verbindung (H) auf der Basis eines Polyphenols mit mindestens einer, insbesondere mindestens zwei, Epichlorhydringruppe(n) enthalten. Unter Polyphenolen werden niedermolekulare, oligomere und polymere Verbindungen verstanden, die mindestens zwei phenolische Hydroxylgruppen enthalten. Vorzugsweise sind mindestens zwei, insbesondere alle phenolischen Hydroxylgruppen der Polyphenole in Epichlorhydrinethergruppen umgewandelt. Bevorzugt werden Bisphenol A und Bisphenol F, insbesondere Bisphenol A, als Polyphenol verwendet.

Die Verbindungen (H) sind handelsübliche Produkte und werden beispielsweise von der Firma Shell Resins unter der Marke Epikote ® vertrieben. Vorzugsweise sind sie in den erfindungsgemäßen Beschichtungsstoffen in einer Menge von 0,5 bis 10 und insbesondere 0,5 bis 5 Gew.-%, bezogen auf den Festkörper des jeweiligen Beschichtungsstoffs, enthalten.

Die erfindungsgemäßen Beschichtungsstoffe können ferner noch mindestens eine Verbindung (J) der allgemeinen Formel I enthalten:

**M**_{**n**}**(X)**_{**m**} (I),

worin die Variablen und der Index die folgende Bedeutung haben:
- M: mindestens ein Zentralatom, ausgewählt aus der Gruppe der Lewis-Akzeptoren,
- X: Lewis-Donoren-Liganden mit mindestens einem Brückenatom, ausgewählt aus den Elementen der 5. und 6. Hauptgruppe des Periodischen Systems der Elemente,
- n: 1 bis 500 und
- m: 3 bis 2.000.

Die Verbindungen I können monomer (einkernig) oder dimer, oligomer oder polymer (mehrkernig) sein.

In der allgemeinen Formel I steht die Variable M für mindestens ein Zentralatom, das aus der Gruppe der Lewis-Akzeptoren ausgewählt wird. Vorzugsweise wird es aus der Gruppe, bestehend aus Aluminium, Titan und Zirkonium, ausgewählt. Bevorzugt ist M = Titan.

In der allgemeinen Formel I steht die Variable X für Lewis-Donoren-Liganden mit mindestens einem Brückenatom, ausgewählt aus den Elementen der 5. und 6. Hauptgruppe des Periodischen Systems der Elemente. Vorzugsweise wird das Brückenatom aus der Gruppe, bestehend aus Stickstoff-, Phosphor-, Sauerstoff- und Schwefelatomen, insbesondere Phosphor- und Sauerstoffatomen, ausgewählt.

Lewis-Akzeptoren und Lewis-Donoren oder -Donatoren sind Lewis-Säuren und -Basen i. S. d. Säure-Base-Begriffs von Lewis.

In der allgemeinen Formel I steht der Index n für eine Zahl, insbesondere eine ganze Zahl, von 1 bis 500, vorzugsweise 1 bis 100, bevorzugt 1 bis 50, besonders bevorzugt 1 bis 20 und insbesondere 1 bis 20. Der Index m steht für eine Zahl, insbesondere eine ganze Zahl, von 3 bis 2.000, vorzugsweise 3 bis 1.000, bevorzugt 3 bis 500, besonders bevorzugt 3 bis 100 und insbesondere 3 bis 50.

Beispiele gut geeigneter Verbindungen I sind monomere, dimere, oligomere oder polymere Alkoxide von Aluminium oder Titan, wie
- Al₃ (O-tert.-buytyl)₆,
- Al₄(O-isopropyl)₁₂, oder
- Ti(O-ethyl)₄.

Beispiele besonders gut geeigneter Verbindungen der allgemeinen Formel I sind Verbindungen der allgemeinen Formel II:

**RO-M[-O-P(O)(OH)-O-P(O)(OR**^{**1**}**)**_{**2**}**]**_{**3**} **. HP(O)(OR**^{**2**}**)**_{**2**} (II),

worin die Variablen R, R¹ und R² unabhängig voneinander für aliphatische und cycloaliphatische Reste stehen und M die vorstehend angegebene Bedeutung hat und insbesondere aus der Gruppe, bestehend aus Aluminium, Titan und Zirkonium, ausgewählt wird. Besonders bevorzugt ist M = Titan.

In der allgemeinen Formel II stehen die Variablen R, R¹ und R² unabhängig voneinander für aliphatische und cycloaliphatische, insbesondere aliphatische, Reste. Vorzugsweise enthalten die aliphatische Reste 3 bis 20 Kohlenstoffatome. Beispiele geeigneter aliphatischer Reste sind Propyl, Isopropyl, Butyl, sec.-Butyl, Isobutyl, tert.-Butyl, n-Pentyl, Isoamyl, n-Hexyl, n-Heptyl, Octyl, Isoctyl, Nonyl, Decyl, Undecyl, Dodecyl, Tridecyl, Tetradecyl, Pentadecyl, Hexadecyl, Heptadecyl, Octadecyl, Nonadecyl und Eicosanyl, bevorzugt Isopropyl, Octyl und Isooctyl. Besonders bevorzugt ist R Isopropyl, R¹ Octyl und R² Isooctyl.

Ganz besonders vorteilhaft und somit das Addukt von Isopropyl-tris (dioctylpyrophosphato)-titanat mit einem Mol Diisooctylphosphit als Bestandteil (J) eingesetzt. Das Addukt ist eine handelsübliche Verbindung und wird beispielsweise unter der Marke KEN-REACT ® von der Firma Kenrich Petrochemicals vertrieben.

Vorzugsweise enthalten die erfindungsgemäßen Beschichtungsstoffe die Verbindungen (J) in einer Menge von 0,01 bis 5, bevorzugt 0,05 bis 8, besonders bevorzugt 0,1 bis 7, ganz besonders bevorzugt 0,1 bis 5 und insbesondere 0,1 bis 3 Gew.-%, jeweils bezogen auf den Festkörper eines erfindungsgemäßen Beschichtungsstoffs.

Darüber hinaus können die erfindungsgemäßen Beschichtungsstoffe noch mindestens einen Zusatzstoff (K) enthalten, der von den vorstehend beschriebenen Bestandteilen (A) bis (J) verschieden ist und aus der Gruppe der anorganischen und organischen Zusatzstoffe ausgewählt wird.

Beispiele geeigneter Zusatzstoffe (K) sind übliche und bekannte farb- und/oder effektgebende Pigmente, Füllstoffe, Nanopartikel, Reaktivverdünner für die thermische Härtung, Vernetzungsmittel, UV-Absorber, Lichtschutzmittel, Radikalfänger, Initiatoren für die radikalische Polymerisation, Katalysatoren für die thermische Vernetzung, Slipadditive, Polymerisationsinhibitoren, Entschäumer, Emulgatoren, Entgasungsmittel, Netz- und Dispergiermittel, Haftvermittler, Verlaufmittel, filmbildende Hilfsmittel, rheologiesteuernde Additive (Verdicker), Flammschutzmittel, Sikkative, Trocknungsmittel, Hautverhinderungsmittel, Korrosionsinhibitoren, Wachse und Mattierungsmittel, wie sie aus dem Lehrbuch »Lackadditive« von Johan Bieleman, Wiley-VCH, Weinheim, New York, 1998, bekannt sind.

Die Herstellung der erfindungsgemäßen Beschichtungsstoffe weist keine methodischen Besonderheiten auf, sondern erfolgt durch das Vermischen der vorstehend beschriebenen Bestandteile. Dabei können Mischaggregate, wie Rührkessel, Dissolver, In-line-Dissolver, Perlmühlen, Rührwerksmühlen, statische Mischer, Zahnkranzdispergatoren oder Extruder, verwendet werden. Bei der Herstellung können die einzelnen Bestandteile der erfindungsgemäßen Mischung nacheinander separat eingearbeitet werden. Es ist indes von Vorteil,
(1) die Bestandteile (A), (I), (E), (D) und (G) in der angegebenen Reihenfolge zu vermischen und die resultierende Mischung bis zu einer Kornfeinheit nach Hegmann < 20 µm zu vermahlen und
(2) die vermahlene Mischung (1) mit den Bestandteilen (H), (B 1), (B 2), (C), (J) und (G) in der angegebenen Reihenfolge zu versetzen, um anschließend
(3) die resultierende Mischung (2) zu homogenisieren.

Vorzugsweise werden die Katalysatoren (F1) und (F2) der homogenisierten Mischung (3) kurz vor der Applikation zugegeben.

Die erfindungsgemäßen Beschichtungsstoffe sind hervorragend als Coil-Coating-Lacke für die Bandbeschichtung geeignet. Das Bandbeschichtung geht aus von einem Metallband, das in üblicher und bekannter Weise gereinigt, entfettet, passiviert, chemisch behandelt, gespült und getrocknet wurde. Das Metallband kann einseitig oder doppelseitig beschichtet werden.

Geeignet sind alle Metalle, aus denen sich Bänder formen lassen, die den mechanischen, chemischen und thermischen Beanspruchungen der Bandbeschichtung gewachsen sind. Gut geeignet sind Metallbänder auf der Basis von Aluminium oder Eisen. Im Falle von Eisen sind kaltgewalzte Stähle, elektrolytisch verzinkte Stähle, feuerverzinkte Stähle oder Edelstähle besonders gut geeignet. Vorzugsweise sind die Bänder 200 µm bis 2 mm dick.

Für die Bandbeschichtung durchläuft das Metallband eine Bandbeschichtungsanlage, wie sie z.B. in Römpp Lexikon Lacke und Druckfarben, Georg Thieme Verlag, Stuttgart, New York, 1998, Seite 55, »Bandbeschichtung«, oder in der deutschen Patentanmeldung DE 196 32 426 A 1 beschrieben wird, mit einer Geschwindigkeit, die den Applikations- und Härtungseigenschaften der angewandten erfindungsgemäßen Beschichtungsstoffe angepasst ist. Die Geschwindigkeit kann daher von Beschichtungsprozeß zu Beschichtungsprozeß sehr breit variieren. Vorzugsweise liegt sie bei 10 bis 150, bevorzugt 12 bis 120, besonders bevorzugt 14 bis 100, ganz besonders bevorzugt 16 bis 80 und insbesondere 20 bis 70 m/min.

Die Applikation der erfindungsgemäßen Beschichtungsstoffe kann in beliebiger Weise, z. B. durch Spritzen, Gießen oder Walzlackieren, erfolgen. Von diesen Applikationsverfahren ist das Walzlackieren besonders vorteilhaft und wird daher erfindungsgemäß bevorzugt verwendet.

Jeder Applikationsschritt des Walzlackierens kann mit mehreren Walzen durchgeführt werden. Vorzugsweise werden zwei bis vier und insbesondere zwei Walzen angewandt.

Beim Walzlackieren taucht die sich drehende Aufnahmewalze (Pick-up-Walze) in einen Vorrat des erfindungsgemäßen Lacks ein und übernimmt so den zu applizierenden Lack. Dieser wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen.

Der erfindungsgemäße Lack kann aber auch direkt in einen Spalt zwischen zwei Walzen gepumpt werden, was von der Fachwelt auch als NIP-Feed bezeichnet wird.

Erfindungsgemäß ist das gegenläufige Abstreifen oder das Reverse-Roller-Coating-Verfahren von Vorteil und wird deshalb bevorzugt angewandt.

Beim dem Walzlackieren können die Umlaufgeschwindigkeiten der Aufnahmewalze und der Applikationswalze von Beschichtungsprozeß zu Beschichtungsprozeß sehr stark variieren. Vorzugsweise hat die Applikationswalze eine Umlaufgeschwindigkeit, die 110 bis 125% der Bandgeschwindigkeit beträgt, und die Aufnahmewalze eine Umlaufgeschwindigkeit, die 20 bis 40% der Bandgeschwindigkeit beträgt.

Vorzugsweise werden die erfindungsgemäßen Beschichtungsstoffe in einer Naßschichtdicke appliziert, daß nach der Aushärtung der Lackschichten schweißbare, insbesondere punktschweißbare, Beschichtungen einer Trockenschichtdicke von 4 bis 12, bevorzugt 5 bis 10, besonders bevorzugt 5 bis 9,5 und insbesondere 6 bis 9 µm resultieren.

Die vorstehend beschriebenen Applikationsmethoden können auch bei den Lacken angewandt werden, mit denen die erfindungsgemäßen Beschichtungen überlackiert werden, es sei denn es handelt sich um Pulverlacke oder um Elektrotauchlackierungen, bei denen die üblichen und bekannten speziellen Applikationsmethoden eingesetzt werden, wie das elektrostatische Pulversprühen bei langsam laufenden Bändern oder das sogenannte "Powder-Cloud-Chamber"-Verfahren bei schnell laufenden Bändern und die kathodische Elektrotauchlackierung.

Die Aufheizung der erfindungsgemäßen Lackschichten bei der thermischen Härtung erfolgt vorzugsweise durch Konvektionswärmeübertragung, Bestrahlen mit nahem oder fernem Infrarot und/oder bei Bändern auf der Basis von Eisen durch elektrische Induktion. Die maximale Objekttemperatur oder PMT liegt vorzugsweise bei maximal 200, bevorzugt 180 und insbesondere bei maximal 160 °C. Es ist ein ganz besonderer Vorteil der erfindungsgemäßen Coil-Coating-Lacke und der erfindungsgemäßen Beschichtungsverfahren, daß diese vergleichsweise niedrigen Temperaturen angewandt werden können und dennoch erfindungsgemäße Beschichtungen mit hervorragenden anwendungstechnischen Eigenschaften resultieren.

Die Aufheizzeit, d.h. die Zeitdauer der thermischen Härtung variiert in Abhängigkeit von dem eingesetzten erfindungsgemäßen Lack. Vorzugsweise liegt sie bei 10 s bis 2 min.

Wird im wesentlichen die Konvektionswärmeübertragung angewandt, werden bei den bevorzugten Bandlaufgeschwindigkeiten Umluftöfen einer Länge von 30 bis 50, insbesondere 35 bis 45 m, benötigt. Vorzugsweise liegt die Umlufttemperatur unter 300, insbesondere unter 280 °C.

Werden bei der Bandbeschichtung mehrere Lacke appliziert, wird dies in einer entsprechend ausgelegten Anlage durchgeführt, bei der mehrere Applikations- sowie ggf. Härtungsstationen hintereinander geschaltet sind. Oder aber nach der Applikation und der Härtung des ersten, d. h. des erfindungsgemäßen, Lacks wird das beschichtete Band wieder gewickelt, wonach das beschichtete Coil in einer zweiten, dritten etc. Bandbeschichtungsanlage einseitig oder beidseitig mit zweiten, dritten etc. Lackierungen versehen wird.

Nach der Herstellung der erfindungsgemäßen beschichteten Bänder können die zu beschichteten Coils gewickelt und dann an einem anderen Ort weiter verarbeitet werden; sie können aber auch direkt von der Bandbeschichtung kommend weiterverarbeitet werden. So können sie mit Kunststoffen laminiert oder mit abziehbaren Schutzfolien versehen werden. Sie können nach ihrer Zerkleinerung in Teile geeigneter Größe formgebend bearbeitet werden. Beispiele geeigneter formgebender Bearbeitungsmethoden sind Pressen und Tiefziehen.

Die resultierenden erfindungsgemäßen Coils, Profilelemente und Formteile sind kratzfest, korrosionsstabil, witterungsstabil und chemikalienstabil und können problemlos mit den unterschiedlichsten Lacken überlackiert werden. Überraschend ist, daß keine Vorbehandlung der Metallbänder mit Chromat notwendig ist, um einem vorzüglichen Korrosionsschutz zu erzielen.

Vor allem aber sind die erfindungsgemäßen Coils, Profilelemente und Formteile hervorragend schweißbar, insbesondere punktschweißbar. Dabei bewirken die erfindungsgemäßen Beschichtungen, bessere Schweißpunkte mit einem glatteren, ästhetisch noch immer ansprechenden Umkreis. Außerdem sind die Schweißverbindungen besonders fest. Die erfindungsgemäßen Beschichtungen weisen außerdem einen vergleichsweise breiten Schweißbereich und einen vergleichsweise niedrigen Durchgangswiderstand auf und bewirken, was die Schweißelektroden betrifft, eine besonders hohe Standmenge, d. h., die Anzahl der Schweißpunkte, die mit einer Elektrode gesetzt werden kann, ist besonders hoch.

Die mit den erfindungsgemäßen Beschichtungen beschichteten Coils sind daher hervorragend für Anwendungen bzw. die Verwendung im Automobilbau beispielsweise für die Herstellung von Karosserieteilen und Karosserien, Nutzfahrzeugaufbauten und Verkleidungen von Caravans, im Hausgerätebereich beispielsweise für die Herstellung von Waschmaschinen, Geschirrspülmaschinen, Trocknern, Kühlschränken, Gefrierschränken oder Herden, im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren, Rohrisolierungen, Rolläden oder Fensterprofilen, geeignet.

### Beispiele

### Beispiel 1

### Die Herstellung eines Coil-Coating-Lacks

In einem geeigneten Rührgefäß wurden in der angegebenen Reihenfolge 22,7 Gewichtsteile eines gesättigten aliphatischen Polyesters mit einer Säurezahl von 3 bis 6 mg KOH/g, einer Hydroxylzahl von 80 mg KOH/g, einem zahlenmittleren Molekulargewicht von 3050 Dalton, einer Uneinheitlichkeit U=Mw/Mn-1 von 4,9 und einer Glasübergangstemperatur von 17 °C [Uralac ® SN 822 S1, 70 Gew.-%ig in Solvesso ® 100 (Exxon Mobil Chemicals), der Firma DSM Kunstharze], 0,65 Gewichtsteile eines mit Bis(trimethylsilyl)amin oberflächenmodifizierten pyrogenen Siliziumdioxids (Aerosil ® R 812 S der Firma Degussa), 2,75 Gewichtsteile mit Calciumionen modifiziertes Siliziumdioxid (Shieldex ® der Firma Grace Division), 2,99 Gewichtsteile Zinkphosphat (Sicor ® ZNP/S der Firma Waardals Kjemiske Fabriken) und 3,53 Gewichtsteile Solvesso ® 150 (Exxon Mobil Chemicals) mit einander vermischt. Die resultierende Mischung wurde während 10 Minuten mit einem Dissolver vordispergiert und anschließend mit einer Perlmühle (Mahlkörper: 2 mm SAZ-Glasperlen) unter Kühlung während 12 Minuten bis zu einer Kornfeinheit nach Hegmann von 13 µm gemahlen. Anschließend wurde das Mahlgut von den Mahlkörpern abgetrennt.

Das Mahlgut wurde in der angegebenen Reihenfolge mit 1,79 Gewichtsteilen eines Bisphenol A-Epichlorhydrins (Epikote ® 834 der Firma Shell Resins, CAS.: 5068-38-6), 2,8 Gewichtsteilen eines mit Methanol teilveretherten Benzoguanamin-Formaldehyd-Harzes (Luwipal ® LR 8817 der Firma BASF AG), 2,5 Gewichtsteilen eines mit Methanol veretherten Melamin-Formaldehyd-Harzes (Luwipal ® 072 der Firma BASF AG), 59,18 Gewichtsteilen Eisenphosphid (Ferrophos ® HRS 2132, CAS.: 1310-43-6), 1,0 Gewichtsteilen des Addukt von Isopropyl-tris(dioctylpyrophosphato)-titanat mit einem Mol Diisooctylphosphit (KEN-REACT ® KR38S der Firma Kenrich Petrochemicals) und 1,1 Gewichtsteilen Solvesso ® 150 (ExxonMobil Chemicals) vermischt (aufgelackt). Die resultierende aufgelackte Mischung wurde mit einem Dissolver während 10 Minuten homogenisiert.

Zur Verwendung als Coil-Coating-Lack wurde die aufgelackte Mischung mit Solvesso ® 150 auf eine Viskosität von 80 s im DIN 4-Auslaufbecher eingestellt.

Vor der Applikation wurde der Coil-Coating-Lack, bezogen auf 100 Gewichtsteile seines Festkörpers, mit 0,5 Gewichtsteilen einer handelsüblichen aminblockierten Sulfonsäure (Nacure ® 2500 der Firma King Industries) und 3 Gewichtsteilen eines handelsüblichen sauren Epoxidharz-Phosphorsäure-Addukts (Epikote ® 828 der Firma Shell Resins) versetzt.

### Beispiel 2

### Die Herstellung einer Beschichtung

Für das Beispiel 2 wurde der erfindungsgemäße Coil-Coating-Lack des Beispiels 1 verwendet. Er wurde mit Hilfe von Stabrakeln auf Stahlplatten der Sorte ZE 75/75 mit chromatfreier Vorbehandlung in einer Naßschichtdicke appliziert, daß nach der Härtung in einem Durchlauftrockner bei einer Umlufttemperatur von 260 °C und einer PMT von 154 °C Beschichtungen einer Trockenschichtdicke von 8 µm resultierten.

Um zu bestimmen, wie gut sich die Stahlplatten des Beispiels 2 verschweißen ließen, wurden jeweils zwei Stahlplatten gemäß einer in der Fachwelt bekannten Norm von DaimlerChrysler miteinander punktverschweißt. Dabei wurde der Schweißbereich (kA), der Durchgangswiderstand (Ohm) und die Standmengen der Elektroden, d. h., die Anzahl der Schweißpunkte, die mit einer Elektrode gesetzt werden konnten, gemessen. Außerdem wurden Qualitätsmerkmale, wie Güte der Schweißpunkte und Glätte und ästhetische Wirkung des Umkreises der Schweißpunkte, visuell bestimmt und jeweils wie folgt benotet:

### Note Bedeutung

- 1: sehr gut
- 2: gut
- 3: befriedigend, noch brauchbar
- 4: schlecht, unbrauchbar.

Des weiteren wurde die Festigkeit der Schweißverbindungen manuell qualitativ bestimmt und wie folgt benotet:

### Note Bedeutung

- 1: sehr fest, per Hand praktisch nicht mehr zu lösen
- 2: fest, per Hand nur mit Schwierigkeiten zu lösen
- 3: per Hand leicht zu lockern.

Die Punktverschweißbarkeit der erfindungsgemäßen Stahlplatten war sehr gut: Schweißbereich (kA):1,9; Durchgangswiderstand (Ohm): 0,0187; Standmenge (Anzahl der Punkte) : 1.000; Güte der Schweißpunkte: Note 1; Umkreis: Note 1; Festigkeit: Note 1.

Die erfindungsgemäßen Beschichtungen waren chemikalienbeständig: Belastung mit Methylethylketon: 70 Doppelhübe; hervorragend verformbar: T-Bend-Test: 1,5; Erichsentiefung: 7 mm; Näpfchen bei einer Schablone mit 0,9 mm Spaltbreite und einer Zugkraft von 4 kN: in Ordnung = i.O.; haftfest: Gitterschnitt-Test nach DIN ISO 2409: 1994-10, Schneidenabstand 1 mm, mit Tesaband-Abriß: i.O.; und ausgesprochen korrosionsstabil: Salzsprühnebeltest nach DIN 50021-55, Exposition 1008 Stunden: Ergebnis A: Weißrost an den Kanten; Schnitt: i.O.; Ergebnis B: Unterwanderung in mm min./max.: Kante links: 2,8/3; Kante rechts: 2,6/2,9; Schnitt: 0,3/0,5; Konstantklimawechseltest nach VDA: Weißrost auf der Fläche; Rotrost auf den Kanten: akzeptabel; Unterwanderung in mm min./max.: Kante links: 0/0,1; Kante rechts: 0/0; Schnitt: 0/0,15.

## Patentansprüche

1. Beschichtungsstoffe für Coil-Coating-Verfahren, enthaltend
(A) als Bindemittel mindestens einen aliphatischen, araliphatischen und/oder aromatischen Polyester mit einer Säurezahl von < 10 mg KOH/g, einer Hydroxylzahl von 30 bis 200 mg KOH/g, sowie einem zahlenmittleren Molekulargewicht Mn zwischen 1000 und 5000 Dalton,
(B) als Vernetzungsmittel mindestens zwei aminogruppenhaltige Harze mit unterschiedlicher Reaktivität,
(C) mindestens ein elektrisch leitfähiges Pigment.

2. Beschichtungsstoffe nach Anspruch 1, **dadurch gekennzeichnet, daß** der Polyester (A) eine zahlenmittlere Molmasse von 1500 bis 4000 Dalton aufweist.

3. Beschichtungsstoffe nach einem der Ansprüche 1 oder 2, **dadurch gekennzeichnet, daß** der Polyester (A) eine Uneinheitlichkeit des Molekulargewichts von < 10 aufweist.

4. Beschichtungsstoffe nach einem der Ansprüche 1 bis 3, **dadurch gekennzeichnet, daß** der Polyester (A) eine Glasübergangstemperatur von -20 bis +50 °C hat.

5. Beschichtungsstoffe nach einem der Ansprüche 1 bis 4, **dadurch gekennzeichnet, daß** sie den Polyester (A) in einer Menge von 5 bis 40 Gew.-%, bezogen auf den Festkörper des jeweiligen Beschichtungsstoffs, enthalten.

6. Beschichtungsstoffe nach einem der Ansprüche 1 bis 5, **dadurch gekennzeichnet, daß** sie zusätzlich einen oder mehrere der folgenden Bestandteile
(D) mindestens ein korrosionshemmendes Pigment,
(E) mindestens ein amorphes Siliziumdioxid, das mit Metallionen modifiziert ist,
(F) mindestens zwei Katalysatoren der thermischen Vernetzung von N-Methylolgruppen und/oder N-Methoxymethylgruppen mit den komplementären Hydroxylgruppen,
(G) mindestens ein organisches Lösemittel,
(H) mindestens eine Verbindung auf der Basis eines Polyphenols mit mindestens einer Epichlorhydringruppe,
(I) mindestens ein oberflächenmodifiziertes, pyrogenes Siliziumdioxid,
(J) mindestens eine Verbindung der allgemeinen Formel I:
**M**_{**n**}**(X)**_{**m**} (I),
worin die Variablen und der Index die folgende Bedeutung haben:
M mindestens ein Zentralatom, ausgewählt aus der Gruppe der Lewis-Akzeptoren,
X Lewis-Donoren-Liganden mit mindestens einem Brückenatom, ausgewählt aus den Elementen der 5. und 6. Hauptgruppe des Periodischen Systems der Elemente,
n 1 bis 500 und
m 3 bis 2.000;
enthalten.

7. Beschichtungsstoffe nach einem der Ansprüche 1 bis 6, **dadurch gekennzeichnet, daß** das Vernetzungsmittel (B)
(B1) mindestens ein Benzoguanamin-Formaldehyd-Harz, welches gegebenenfalls mit Methanol teil- und/oder vollverethert ist und/oder
(B2) mindestens Melamin-Formaldehyd-Harz, welches gegebenenfalls mit Methanol verethert ist,
enthält oder hieraus besteht.

8. Beschichtungsstoffe nach Anspruch 7, **dadurch gekennzeichnet, daß** das Gewichtsverhältnis von Vernetzungsmittel (B1) zu Vernetzungsmittel (B2) bei 1 : 10 bis 10 : 1 liegt.

9. Beschichtungsstoffe nach einem der Ansprüche 7 oder 8, **dadurch gekennzeichnet, daß** sie die Vernetzungsmittel (B) in einer Menge von 1 bis 10 Gew.-%, bezogen auf den Festkörper des jeweiligen Beschichtungsstoffs, enthalten.

10. Beschichtungsstoffe nach einem der Ansprüche 1 bis 9, **dadurch gekennzeichnet, daß** mindestens ein elektrisch leitfähiges Pigment (C) aus der Gruppe, bestehend aus elementarem Silizium und metallischen, wasserunlöslichen Phosphiden, ausgewählt wird.

11. Beschichtungsstoffe nach einem der Ansprüche 6 bis 10, **dadurch gekennzeichnet, daß** das korrosionshemmende Pigment (D) aus der Gruppe, bestehend aus Zinkphosphat, Zinkorthophosphat, Zinkmetaborat und Bariummetaborat-Monohydrat, ausgewählt wird.

12. Beschichtungsstoffe nach einem der Ansprüche 6 bis 11, **dadurch gekennzeichnet, daß** die Metallionen in dem amorphen Siliziumdioxid (E) aus der Gruppe, bestehend aus Erdalkalimetallionen, Scändium-, Yttrium- und Lanthanionen, Lanthanidionen sowie Zink- und Aluminiumionen, ausgewählt werden.

13. Beschichtungsstoffe nach einem der Ansprüche 6 bis 12, **dadurch gekennzeichnet, daß** sie zwei Katalysatoren (F) enthalten.

14. Beschichtungsstoffe nach einem der Ansprüche 6 bis 13, **dadurch gekennzeichnet, daß** mindestens einer der Katalysatoren (F) aus der Gruppe (F1), bestehend aus sauren Epoxidharz-Phosphorsäure-Addukten, und mindestens ein anderer der Katalysatoren (F) aus der Gruppe (F2), bestehend aus blokkierten Sulfonsäuren, ausgewählt wird.

15. Beschichtungsstoffe nach einem der Ansprüche 6 bis 14, **dadurch gekennzeichnet, daß** das Gewichtsverhältnis von Katalysator (F1) zu Katalysator:(F2) bei 20 : 1 bis 1 : 3 liegt.

16. Beschichtungsstoffe nach einem der Ansprüche 6 bis 15, **dadurch gekennzeichnet, daß** sie die Katalysatoren (F) in einer Menge von 0,5 bis 10 Gew.-%, bezogen auf den Festkörper des jeweiligen Beschichtungsstoffs, enthalten.

17. Beschichtungsstoffe nach einem der Ansprüche 6 bis 16, **dadurch gekennzeichnet, daß** sie das organische Lösemittel (G) in einer Menge von 3 bis 70 Gew.-%, bezogen auf die Gesamtmenge des jeweiligen Beschichtungsstoffs, enthalten.

18. Beschichtungsstoffe nach einem der Ansprüche 6 bis 17, **dadurch gekennzeichnet, daß** die Polyphenole, die die Basis der Verbindungen (H) bilden, aus der Gruppe, bestehend aus Bisphenol A und Bisphenol F, ausgewählt werden.

19. Beschichtungsstoffe nach einem der Ansprüche 6 bis 18, **dadurch gekennzeichnet, daß** die Verbindung (J) aus der Gruppe, bestehend aus Verbindungen (J) der allgemeinen Formel II:
**RO-M[-O-P(O)(OH)-O-P(O)(OR**^{**1**}**)**_{**2**}**]**_{**3**} **. HP(O)(OR**^{**2**}**)**_{**2**} (II),
worin die Variablen R, R¹ und R² unabhängig voneinander für aliphatische und cycloaliphatische Reste stehen und M = Titan, Zirkonium und Aluminium, ausgewählt wird.

20. Verfahren zur Herstellung von Beschichtungsstoffen gemäß einem der Ansprüche 1 bis 19, **dadurch gekennzeichnet, daß** man
(1) die Bestandteile (A), (I), (E), (D) und (G) in der angegebenen Reihenfolge vermischt und die resultierende Mischung bis zu einer Komfeinheit nach Hegmann < 20 µm vermahlt und
(2) die vermahlene Mischung (1) mit den Bestandteilen (H), (B1), (B2), (C), (J) und (G) in der angegebenen Reihenfolge versetzt, wonach man
(3) die resultierende Mischung (2) homogenisiert.

21. Verfahren nach Anspruch 20, **dadurch gekennzeichnet, daß** die Katalysatoren (F) der Mischung (3) vor der Applikation hinzugefügt werden.

22. Verwendung der Beschichtungsstoffe gemäß einem der Ansprüche 1 bis 19 im Automobilbau, Hausgerätebereich, im Leuchtenbereich, im Baubereich im Innen- und Außenbereich.

## Claims

1. Coating material for the coil coating process, comprising
(A) as binder at least one aliphatic, araliphatic and/or aromatic polyester having an acid number of < 10 mg KOH/g, a hydroxyl number of from 30 to 200 mg KOH/g, and a number-average molecular weight Mn of between 1000 and 5000 daltons,
(B) as crosslinking agent at least two amino-containing resins of different reactivity,
(C) at least one electrically conductive pigment.

2. Coating material according to Claim 1, **characterized in that** the polyester (A) has a number-average molar mass of from 1500 to 4000 daltons.

3. Coating material according to either of Claims 1 and 2, **characterized in that** the polyester (A) has a molecular weight polydispersity of < 10.

4. Coating material according to any of Claims 1 to 3, **characterized in that** the polyester (A) has a glass transition temperature of from -20 to +50°C.

5. Coating material according to any of Claims 1 to 4, **characterized in that** it comprises the polyester (A) in an amount of from 5 to 40% by weight, based on the solids of the respective coating material.

6. Coating material according to any of Claims 1 to 5, **characterized in that** it further comprises one or more of the following constituents:
(D) at least one anticorrosion pigment,
(E) at least one amorphous silica modified with metal ions,
(F) at least two catalysts of the thermal crosslinking of N-methylol groups and/or N-methoxymethyl groups with the complementary hydroxyl groups,
(G) at least one organic solvent,
(H) at least one compound based on a polyphenol containing at least one epichlorohydrin group,
(I) at least one surface-modified pyrogenic silica,
(J) at least one compound of the general formula (I) :
**M**_{**n**}**(X)**_{**m**} (I)
in which the variables and the indices have the following meanings:
M is at least one central atom selected from the group of Lewis acceptors,
X stands for Lewis donor ligands having at least one bridging atom selected from elements of main groups 5 and 6 of the Periodic Table of the Elements,
n is from 1 to 500, and
m is from 3 to 2000.

7. Coating material according to any of Claims 1 to 6, **characterized in that** the crosslinking agent (B) comprises
(B1) at least one benzoguanamine-formaldehyde resin which may have been etherified fully and/or partly with methanol, and/or
(B2) at least one melamine-formaldehyde resin, which may have been etherified with methanol
or consists thereof.

8. Coating material according to Claim 7, **characterized in that** the weight ratio of crosslinking agent (B1) to crosslinking agent (B2) is from 1:10 to 10:1.

9. Coating material according to either of Claims 7 and 8, **characterized in that** it comprises the crosslinking agents (B) in an amount of from 1 to 10% by weight, based on the solids of the respective coating material.

10. Coating material according to any of Claims 1 to 9, **characterized in that** at least one electrically conductive pigment (C) is selected from the group consisting of elemental silicon and metallic, water-insoluble phosphides.

11. Coating material according to any of Claims 6 to 10, **characterized in that** the anticorrosion pigment (D) is selected from the group consisting of zinc phosphate, zinc orthophosphate, zinc metaborate, and barium metaborate monohydrate.

12. Coating material according to any of Claims 6 to 11, **characterized in that** the metal ions in the amorphous silica (E) are selected from the group consisting of alkaline earth metal ions, scandium ions, yttrium ions, and lanthanum ions, lanthanide ions, and zinc ions and aluminium ions.

13. Coating material according to any of Claims 6 to 12, **characterized in that** it comprises two catalysts (F).

14. Coating material according to any of Claims 6 to 13, **characterized in that** at least one of the catalysts (F) is selected from the group (F1) consisting of acidic epoxy resin-phosphoric acid adducts and at least one other of the catalysts (F) is selected from the group (F2) consisting of blocked sulphonic acids.

15. Coating material according to any of Claims 6 to 14, **characterized in that** the weight ratio of catalyst (F1) to catalyst (F2) is from 20:1 to 1:3.

16. Coating material according to any of Claims 6 to 15, **characterized in that** it comprises the catalysts (F) in an amount of from 0.5 to 10% by weight, based on the solids of the respective coating material.

17. Coating material according to any of Claims 6 to 16, **characterized in that** it comprises the organic solvent (G) in an amount of from 3 to 70% by weight, based on the total amount of the respective coating material.

18. Coating material according to any of Claims 6 to 17, **characterized in that** the polyphenols which form the basis of the compounds (H) are selected from the group consisting of bisphenol A and bisphenol F.

19. Coating material according to any of Claims 6 to 18, **characterized in that** the compound (J) is selected from the group consisting of compounds (J) of the general formula II:
**RO-M[-O-P(O)(OH)-O-P(O)(OR**^{**1**}**)**_{**2**}**]**_{**3**}**.HP(O)(OR**^{**2**}**)**_{**2**} (II)
in which the variables R, R¹, and R² independently of one another stand for aliphatic and cycloaliphatic radicals and M is titanium, zirconium or aluminium.

20. Process for preparing a coating material according to any of Claims 1 to 19, **characterized in that** it comprises
(1) mixing constituents (A), (I), (E), (D), and (G) in the stated order and grinding the resulting mixture to a Hegmann fineness of <20 µm, and
(2) adding the constituents (H), (B1), (B2), (C), (J), and (G) in the stated order to the ground mixture (1), and then
(3) homogenizing the resulting mixture (2).

21. Process according to Claim 20, **characterized in that** the catalysts (F) are added to the mixture (3) prior to application.

22. Use of a coating material according to any of Claims 1 to 19 in automotive construction, in the household appliance sector, in the lighting sector, or in the interior or exterior architectural sector.

## Revendications

1. Matières de revêtement pour le procédé Coil-Coating, contenant :
(A) comme liant, au moins un polyester aliphatique, araliphatique et/ou aromatique d'un indice acide < 10 mg de KOH/g, un indice hydroxyl de 30 à 200 mg de KOH/g, de même qu'un poids moléculaire moyen Mn entre 1000 et 5000 Dalton,
(B) comme réticulant au moins 2 résines contenant des groupes amino, à la réactivité différente,
(C) au moins un pigment conducteur d'électricité.

2. Matières de revêtement selon la revendication 1, **caractérisées en ce que** le polyester (A) présente une masse molaire moyenne de 1500 à 4000 Dalton.

3. Matières de revêtement selon l'une des revendications 1 ou 2, **caractérisées en ce que** le polyester (A) présente une hétérogénéité du poids moléculaire < 10.

4. Matières de revêtement selon l'une des revendications 1 à 3, **caractérisées en ce que** le polyester (A) a une température de transition vitreuse de -20 à +50 C°.

5. Matières de revêtement selon l'une des revendications 1 à 4, **caractérisées en ce qu'**elles contiennent le polyester (A) dans une quantité de 5 à 40% en poids par rapport au solide de la matière de revêtement concernée.

6. Matières de revêtement selon l'une des revendications 1 à 5, **caractérisées en ce qu'**elles contiennent, en outre, un ou plusieurs des composants suivants :
(D) au moins un pigment inhibiteur de corrosion,
(E) au moins un dioxyde de silicium amorphe qui est modifié avec des ions métalliques,
(F) au moins deux catalyseurs de la réticulation thermique de groupes N-méthylol et/ou de groupes N-méthoxyméthyle avec les groupes hydroxyl complémentaires,
(G) au moins un solvant organique,
(H) au moins un composé à base de polyphénol avec au moins un groupe épichlorhydrine,
(I) au moins un dioxyde de silicium pyrogène à modification de surface,
(J) au moins un composé de la formule générale I :
**M**_{**n**}**(X)**_{**m**} **(I),**
dans laquelle les variables et l'indice ont les significations suivantes :
M est au moins un atome central, sélectionné à partir du groupe des accepteurs de Lewis,
X sont des ligands donneurs de Lewis avec au moins un atome ponté, sélectionné parmi les éléments des 5^{e} et 6^{e} groupes principaux du tableau périodique des éléments,
n est compris entre 1 et 500 et
m est compris entre 3 et 2000.

7. Matières de revêtement selon l'une des revendications 1 à 6, **caractérisées en ce que** le réticulant (B) contient :
(B1) au moins une résine benzoguanamine-formaldéhyde qui est éventuellement partiellement et/ou totalement éthérifiée avec du méthanol et/ou,
(B2) au moins une résine mélamine- formaldéhyde qui est éventuellement éthérifiée avec du méthanol,
ou est constitué des éléments en question.

8. Matières de revêtement selon la revendication 7, **caractérisées en ce que** le rapport pondéral du réticulant (B1) au réticulant (B2) est compris entre 1:10 et 10:1.

9. Matières de revêtement selon l'une des revendications 7 ou 8, **caractérisées en ce qu'**elles contiennent les réticulants (B) selon une quantité de 1 à 10% en poids, par rapport au solide de la matière de revêtement concernée.

10. Matières de revêtement selon l'une des revendications 1 à 9, **caractérisées en ce qu'**au moins un pigment (C) conducteur d'électricité est sélectionné dans le groupe comportant du silicium élémentaire et des phosphures métalliques, insolubles dans l'eau.

11. Matières de revêtement selon l'une des revendications 6 à 10, **caractérisées en ce que** le pigment inhibiteur de corrosion (D) est sélectionné dans le groupe constitué de phosphate de zinc, d'orthophosphate de zinc, de métaborate de zinc, de métaborate-monohydrate de baryum.

12. Matières de revêtement selon l'une des revendications 6 à 11, **caractérisées en ce que** les ions métalliques dans le dioxyde de silicium amorphe (E) sont sélectionnés à partir du groupe constitué d'ions de métaux alcalino-terreuk, d'ions de scandium, yttrium et lanthane, d'ions de lanthanides, de même que d'ions de zinc et d'aluminium.

13. Matières de revêtement selon l'une des revendications 6 à 12, **caractérisées en ce qu'**elles contiennent deux catalyseurs (F).

14. Matières de revêtement selon l'une des revendications 6 à 13, **caractérisées en ce qu'**au moins l'un des catalyseurs (F) est sélectionné dans le groupe (F1) constitué d'adducts acides de résine époxy-acide phosphorique et au moins un autre des catalyseurs (F) est sélectionné dans le groupe (F2) constitué d'acides sulfoniques bloqués.

15. Matières de revêtement selon l'une des revendications 6 à 14, **caractérisées en ce que** le rapport pondéral du catalyseur (F1) au catalyseur (F2) est compris entre 20:1 et 1:3.

16. Matières de revêtement selon l'une des revendications 6 à 15, **caractérisées en ce qu'**elles contiennent les catalyseurs (F) dans une quantité de 0,5 à 10% en poids par rapport au solide de la matière de revêtement concernée.

17. Matières de revêtement selon l'une des revendications 6 à 16, **caractérisées en ce qu'**elles contiennent le solvant organique (G) dans une quantité de 3 à 70% en poids, par rapport à la quantité totale de la matière de revêtement concernée.

18. Matières de revêtement selon l'une des revendications 6 à 17, **caractérisées en ce que** les polyphénols qui forment la base des composés (H) sont sélectionnés dans le groupe constitué de bisphénol A et de bisphénol F.

19. Matières de revêtement selon l'une des revendications 6 à 18, **caractérisées en ce que** le composé (J) est sélectionné dans le groupe constitué de composés (J) de la formule générale II :
**RO-M[-O-P(O)(OH)-O-P(O)(OR**^{**1**}**)**_{**2**}**]**_{**3**} **. HP(O)(OR**^{**2**}**)**_{**2**} (II),
dans laquelle les variables R, R¹ et R² sont indépendantes l'une de l'autre des radicaux aliphatiques et cycloaliphatiques et M représente du titane, du zirconium et de l'aluminium.

20. Procédé pour la préparation de matières de revêtement selon l'une des revendications 1 à 19, **caractérisé en ce que** :
(1) les composants (A), (I), (E), (D) et (G) sont mélangés dans l'ordre indiqué, le mélange obtenu étant broyé jusqu'à une finesse de grain selon Hegmann < 20 µm et
(2) le mélange broyé (1) est mélangé avec les composants (H), (B1), (B2), (C), (J) et (G) dans l'ordre indiqué, après quoi,
(3) le mélange résultant (2) est homogénéisé.

21. Procédé selon la revendication 20, **caractérisé en ce que** les catalyseurs (F) du mélange (3) sont ajoutés avant l'application.

22. Utilisation des matières de revêtement selon l'une des revendications 1 à 19 dans la construction automobile, le secteur des appareils ménagers, le secteur de l'éclairage, le secteur de la construction à l'intérieur comme à l'extérieur.
